# EUROPEAN PATENT SPECIFICATION

(11) **EP 3 602 676 B1**
(45) Date of publication and mention of the grant of the patent: **23.02.2022**
(21) Application number: 18713966.2
(22) Date of filing: 30.03.2018
(51) Int. Cl.: H01P 1/04, G02B 6/38, H01R 13/645

(54) **MICROWAVE CONNECTOR ASSEMBLY**
MIKROWELLENVERBINDUNGSANORDNUNG
ENSEMBLE DE CONNECTEUR DE MICRO-ONDES

(30) Priority: 30.03.2017 EP 17163967
(43) Date of publication of application: 05.02.2020
(73) Proprietor: TE Connectivity Germany GmbH, 64625 Bensheim (DE)
(72) Inventor: RUSCH, Christian, 67165 Waldsee (DE); ALMEIDA, Carlos, 64354 Reinheim (DE); MUMPER, Günther, 63329 Egelsbach (DE); GLASER, Stefan, 64646 Heppenheim (DE); JETTER, Rolf, 64297 Darmstadt (DE); BIEBER, Jörg, 64297 Darmstadt (DE); SEIFERT, Martin, 64625 Bensheim (DE); MÜLLER, Wolfgang, 64289 Darmstadt (DE); ENGEL, Andreas, 64407 Fränkisch-Crumbach (DE); NGUYEN, Nhu Lam, 64625 Bensheim (DE)
(74) Representative: Grünecker Patent- und Rechtsanwälte PartG mbB
(86) International application number: PCT/EP2018/058324
(87) International publication number: WO 2018/178349

(56) References cited:
- EP-A1- 0 128 686
- EP-A2- 1 394 584
- US-A- 5 148 593
- US-A- 5 666 449
- US-A1- 2005 285 702
- US-A1- 2016 204 495
- US-B1- 9 490 518

## Description

The invention relates to a microwave connector assembly comprising a cylindrical waveguide ferrule having a receiving end for receiving a polarization-maintaining dielectric waveguide and a connecting end located distal to the receiving end, and a ferrule socket for at least partially receiving the waveguide ferrule in a ferrule receptacle, the waveguide ferrule comprising at least one locking member for a locking connection with the ferrule socket, wherein the ferrule socket comprises at least one coding member that engages a complementary coding member of the waveguide ferrule only when the waveguide ferrule is located in the ferrule socket in a single predetermined angular position or in one of two predetermined angular positions which are rotated by 180° with respect to each other and to a microwave transmission assembly.

Dielectric waveguides may be used to transmit millimeter waves (also referred to as microwaves) in communication links with high data rates. If the dielectric waveguide comprises a rectangular core, the direction of the linear polarized waveguide mode guided within the waveguide is defined by the shape of the core, in contrast to a circular core which guides polarized microwaves without predominant direction.

US 5,666,449 A discloses an optical waveguide device having an optical waveguide chip, first and second adapters and an optical fiber plug. An optical connector plug, which is joined to a front end of an optical fiber cord covering an optical fiber and which is removably inserted to one end of an optical adapter is disclosed in EP 1 349 584 A2. EP 0 128 686 A1 relates to a two-part slidably detachable waveguide connector, particularly for a radar system. A waveguide adaptor assembly with interface and waveguide ends for coupling an end of a waveguide with a desired interface configuration is described in US 2005/0285702 A1. US 9,490,518 B1 discloses a microwave connector assembly comprising a cylindrical waveguide ferrule receiving a polarization-maintaining microwave dielectric waveguide, with a locking member for a locking connection with a ferrule socket.

Known polarization-maintaining waveguides are difficult to handle.

It is therefore the object of the present invention to provide a microwave connector assembly which is easily operated and which allows for a reliable and reproducible connection of two polarization-maintaining microwave waveguides with low losses.

The inventive microwave connector assembly mentioned in the beginning solves the above problem in that the waveguide ferrule comprises a further coding member which, in a projection along the cylindrical waveguide ferrule, is at least partially located within the complementary coding member embodied as a coding recess, according to claim 1.

The engagement of the coding member with the complementary coding member has the advantage that the waveguide ferrule may be reliably, reproducibly and easily rotated into a predetermined angular position in which two dielectric microwave waveguides or a microwave waveguide and a ferrule socket may be coupled to each other with minimized coupling losses. The waveguide ferrule may only be inserted or plugged into the ferrule receptacle if the coding member is engaged with the complementary coding member. If the latter two are not engaged, the waveguide ferrule may not be plugged into the ferrule receptacle.

The microwave transmission assembly mentioned in the beginning solves the above problems by comprising an inventive microwave connector assembly, a dielectric waveguide and a microwave emitter which is located on a flat side of a circuit board in accordance with claim 7.

The microwave emitter has a microwave antenna with a radiation pattern that is at least partially directed towards the waveguide end, and wherein the dielectric waveguide has a free waveguide end which is located on a flat side of the circuit board.

In the following, further embodiments of the present invention will be presented. The embodiments shown are advantageous on their own, wherein technical features of the different embodiments may be arbitrarily combined or omitted.

The waveguide ferrule may be embodied as a hollow shape fitting to an outer shape of the waveguide which extends along a longitudinal direction. The waveguide ferrule may, in particular, be embodied as a hollow cylinder. An inner free diameter of the waveguide ferrule may be equal or slightly smaller than an outer diameter of a dielectric waveguide to be received within the waveguide ferrule.

The ferrule receptacle may also have an inner free diameter which, however, may be substantially equal or larger than an outer diameter of the waveguide ferrule.

The outer diameter of the waveguide ferrule may be defined at a position, at which the locking member is located. Furthermore, the waveguide receptacle may comprise portions of different free inner diameters, such that the waveguide ferrule base, which has a smaller outer diameter than the portion comprising the locking member, as well as the portion with the locking member, may be received within the ferrule receptacle with a sufficiently small play. A sufficiently small play is to be understood as the allowable tolerances in the positioning between the waveguide ferrule and the ferrule socket, within which coupling losses are avoided. Depending on the wavelength of the microwaves used, said tolerances are different for different applications.

The locking member may be understood as a collar which may be attached to the waveguide ferrule base in a monolithic or a two-piece manner by appropriate attachment means, such as welding, soldering or the like.

The locking member may extend from a substantially cylindrical waveguide ferrule base in a radial direction and may extend at least partially around the waveguide ferrule base in a circumferential direction.

The complementary coding member of the waveguide ferrule may be embodied as a locking recess and the coding member of the ferrule socket may extend into the ferrule receptacle and may be embodied as a fin, a stent or a slot.

More than one coding member may be comprised, wherein the corresponding number of complementary coding members are embodied at the waveguide ferrule.

A further embodiment of the inventive microwave connector assembly comprises complementary locking members of the waveguide ferrule with a flattened portion being flattened in a direction opposite a radial direction. Such a flattened portion may be easily produced by deformation of the waveguide ferrule.

In another embodiment of the inventive microwave connector assembly, two complementary coding members and two coding members are comprised which are located at radially opposed sides of the waveguide ferrule base and/or at radially opposed sides of the ferrule receptacle, respectively. This is in particular advantageous, as a polarization-maintaining connection between two polarization-maintaining components comprises exactly two predetermined angular positions in which coupling losses are minimized.

The polarization-maintaining components may, for instance, be two polarization-maintaining dielectric waveguides or a dielectric waveguide and a ferrule socket.

Therefore, a predetermined angular position between, as an example, the waveguide ferrule and the ferrule socket may be obtained easier and faster by an operator, even if the operator establishes the connection without sight of the connector itself.

Furthermore, two coding members and two recesses allow for smaller angular positioning tolerances compared to an embodiment with solely one coding member and one coding recess.

The inventive microwave connector assembly may, as mentioned above, comprise more than two coding recesses and coding members, wherein such an embodiment comprises preferentially an even number of coding recesses and coding members resulting in a rotational symmetry of two. Such a microwave connector assembly further comprises a non-equal angular spacing between the coding members and coding recesses.

The further coding member, which may be embodied as a fin, a stent or different geometrical shape, may be located within the coding recess or may be located at a circumferential position of the coding recess but shifted along the longitudinal axis of the waveguide ferrule away from the coding recess. A projection along the cylindrical waveguide ferrule is to be understood as a projection along the longitudinal axis of the waveguide ferrule base.

The further coding member may decrease positioning tolerances between the waveguide ferrule and the ferrule socket.

The inventive microwave connector assembly may, in particular, comprise two further coding members on opposite sides of the waveguide ferrule.

A dielectric waveguide may be comprised, which may be inserted with a waveguide end into the waveguide ferrule base from the receiving end. The waveguide end is the portion of the waveguide prepared for coupling microwave radiation into the waveguide or for coupling microwave radiation out of the waveguide. The waveguide end may be obtained by splicing the waveguide, wherein during the splicing a clean-cut end face or facet is obtained at the waveguide end.

According to another embodiment of the inventive microwave connector assembly, a dielectric waveguide is comprised, the dielectric waveguide having a free waveguide end which extends beyond the waveguide ferrule.

If the waveguide end extends beyond the waveguide ferrule, a portion of the extending dielectric waveguide may be free-standing. Said portion may be referred to as excess end. The excess end may be the free-standing end of a waveguide, in particular of a pigtail, which routes the signal from a PCB connected to a further connector.

The inventive microwave connector assembly may comprise a counter locking member which may be embodied at a resilient arm that is deflected by the locking member abutting a ramp surface of the counter locking member when the waveguide ferrule is received in the ferrule socket.

The counter locking member may allow securing the waveguide ferrule within the ferrule socket even in harsh mechanical environments with vibration and/or shocks.

The engagement between the locking member and the counter locking member may be referred to as primary lock, wherein said primary lock may in particular be only engaged if the waveguide ferrule is received in the ferrule socket in a predetermined angular position.

In any intermediate angular position different from the one or two predetermined angular positions, the coding member, the complementary coding member (e.g. the coding recess) and the further coding member may prevent the waveguide ferrule from being inserted sufficiently far into the waveguide receptacle to engage the primary lock. A secured connection by the primary lock may therefore only be obtained if the waveguide ferrule is positioned in a correct predetermined angular position to the ferrule socket.

In a further embodiment of the inventive microwave connector assembly, a retainer is comprised, which is insertable into the ferrule socket, wherein a secondary locking member of the retainer engages with the locking member, preventing the waveguide ferrule from being removed from the ferrule socket. The retainer additionally secures the connection between the waveguide ferrule and the ferrule socket.

The retainer may block the locking member and hence the waveguide ferrule. The retainer may engage the locking member in a form-fit.

The retainer may be inserted into the ferrule socket through an opening of the ferrule socket, wherein only parts of the retainer may be received. Receiving the retainer in the ferrule socket may be performed along a direction opposite to the radial direction, that is, from a direction essentially perpendicular to the longitudinal direction of the waveguide ferrule.

The retainer may comprise as many secondary locking members as collar-like locking members of the waveguide ferrule.

The retainer may be embodied in a U-shape with a base that is oriented essentially parallel to the longitudinal direction if the retainer is received in the ferrule socket.

From the base two secondary locking members may extend essentially perpendicular towards the ferrule receptacle and may comprise an arc-shaped abutment front, wherein the arc-shaped curvature and/or radius may preferentially be similar or equal to the radius of the waveguide ferrule base.

The abutment front may therefore contact the waveguide ferrule base with a large area, wherein also a large portion in a circumferential direction of the secondary locking member is located close to the collar-shaped locking member of the waveguide ferrule.

The inventive waveguide connector assembly may be further improved by the ferrule socket comprising two ferrule receptacles opposing each other, the connecting ends of the two waveguide ferrules are positioned in the corresponding ferrule receptacles and are separated apart from each other less than one wavelength of the microwave radiation. The two waveguide ferrules may preferably be positioned less than half a wavelength, more preferably less than a quarter wavelength, and even more preferably less than one tenth of one wavelength of the microwave radiation apart from each other.

Such a waveguide connector assembly may be applied to connect two ferrule assemblies, i.e. two dielectric waveguides with attached waveguide ferrules in order to couple microwave radiation from one dielectric waveguide to the other with minimized coupling losses.

The microwave transmission assembly mentioned in the beginning may preferentially comprise an antenna embodied as a end-fire antenna (e.g. Vivaldi-structure) or a broadside antenna (e.g. patch) which stimulates a linearly polarized microwave.

The radiation pattern of the microwave antenna may comprise a main lobe of radiation, wherein the antenna is positioned such that the main lobe of radiation is directed towards the dielectric waveguide, such that the microwaves may be coupled into the dielectric waveguide. The radiation pattern of the microwave antenna may also be referred to as far-field or antenna pattern.

In the microwave transmission assembly according to the invention, the microwave connector assembly and in particular the ferrule socket is positioned relative to the microwave emitter in order to allow coupling the emitted microwave radiation of the microwave emitter into the dielectric waveguide.

The microwave transmission assembly may be further improved in that the waveguide socket is fastened to the flat side of the circuit board. The waveguide socket therefore does not extend over the thickness of the circuit board to an opposite side of the circuit board, which in turn may be positioned close to further electric or mechanical components.

In this embodiment, the dielectric waveguide is led towards the circuit board in a direction being essentially parallel to the surface of the circuit board.

In a further embodiment of the inventive microwave transmission assembly, the waveguide socket is located within the footprint of the circuit board. This embodiment has the advantage that the edges of the circuit board may comprise components different than the microwave emitter and may for instance be received within a mounting space essentially the same size of the circuit board.

In a further embodiment of the inventive microwave transmission assembly, the dielectric waveguide is oriented slanted perpendicular with respect to the flat side of the circuit board. The ferrule socket which receives the waveguide ferrule with the dielectric waveguide is therefore located within the footprint of the circuit board, such that the dimensions of the microwave transmission assembly are not increased within the plane of the circuit board.

In this embodiment the microwave emitter and its antenna are oriented such that a main lobe of the microwave radiation is emitted in a direction slanted or perpendicular to the circuit board. Accordingly, the ferrule receptacle and the waveguide ferrule received within said ferrule receptacle are oriented essentially along the same direction as the main lobe of the emitted microwave radiation.

The inclination of the dielectric waveguide with respect to the circuit board allows for positioning of the ferrule socket within the footprint of the circuit board and additionally allows guiding away the dielectric waveguide to a side of the circuit board without increasing the dimensions of the footprint of the circuit board.

Furthermore, the microwave radiation may be transmitted through an opening in the ferrule socket to the ferrule receptacle. The waveguide end, whose surface is oriented essentially parallel to the circuit board, is positioned within the ferrule receptacle by means of the waveguide ferrule, such that the polarized microwave radiation may be coupled into the dielectric waveguide which is positioned in a predetermined angular position by means of the waveguide ferrule.

In a further embodiment of the inventive microwave transmission assembly, the waveguide end of the waveguide extends out of the waveguide socket. The portion of the waveguide which extends out of the waveguide socket may be referred to as excess end, wherein said excess end is positioned by means of the waveguide ferrule.

In this embodiment the microwave emitter and its antenna are oriented such that the main lobe of microwave radiation is emitted into a direction which is also inclined to the circuit board.

The microwave emitter may be located directly at a ferrule socket, such that the microwave radiation emitted in an inclined manner is emitted directly into the ferrule socket, wherein the antenna may be located in the vicinity of the waveguide ferrule connecting end and/or in the vicinity of the waveguide end of the waveguide. The waveguide end of the waveguide may in particular coincide with the connecting end of the waveguide ferrule.

In another embodiment, a portion of the dielectric waveguide may extend out of the ferrule socket and may be guided by means of the waveguide ferrule attached to the ferrule socket in an inclined manner towards the circuit board. In the vicinity of the front end of the dielectric waveguide the antenna of the microwave emitter may be located.

If inclination angles between the dielectric waveguide and the circuit board are chosen to be pointed angles (for example an angle below 30°), a cladding of the dielectric waveguide may be cut along a plane essentially parallel to the circuit board in order to allow positioning the beveled or chamfered dielectric waveguide closer to the circuit board.

In the following, the present invention will be described in greater detail by way of example using several embodiments with reference to the appended drawings. The embodiments merely represent possible configurations in which individual features, as described above, can be realized and omitted independently of each other. In the description of the embodiments the same technical features and technical features having the same technical effect are provided with the same reference numerals.

In the figures:
- Fig. 1: shows a first embodiment of a waveguide assembly comprising a dielectric waveguide and a waveguide ferrule;
- Fig. 2: shows a second embodiment of the inventive waveguide assembly;
- Fig. 3: shows a first embodiment of the inventive microwave connector assembly in a perspective exploded view;
- Fig. 4: shows the microwave connector assembly of Fig. 3 in a side view;
- Fig. 5: shows a first embodiment of the inventive microwave transmission assembly;
- Fig. 6: shows a second embodiment of the inventive microwave transmission assembly; and
- Fig. 7: shows a third embodiment of the inventive microwave transmission assembly.

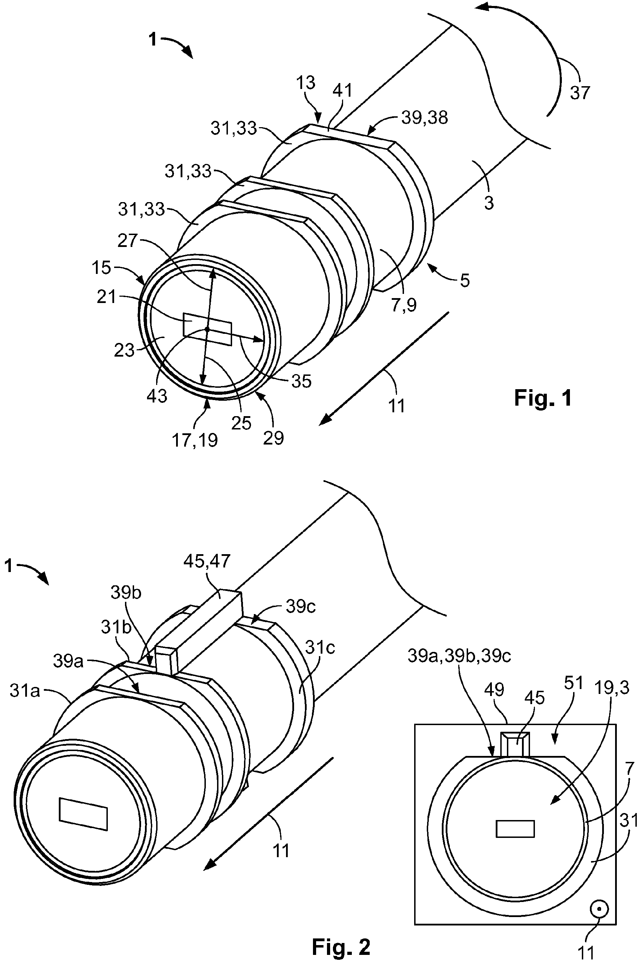

Fig. 1 shows a waveguide assembly 1 which comprises a dielectric waveguide 3 which is inserted into a waveguide ferrule 5. The waveguide ferrule 5 comprises a waveguide ferrule base 7 which is embodied as a hollow shape depending on the waveguide outer shape (e.g. cylinder 9) and which extends along a longitudinal direction 11.

The waveguide ferrule 5 has a receiving end 13 for receiving the dielectric waveguide 3 along the longitudinal direction 11. Distal to the receiving end 13 the waveguide ferrule 5 has a connecting end 15. A waveguide end 17, respectively, facet 19 of the dielectric waveguide 3 extends to the connecting end 15 of the waveguide ferrule 5 in the embodiment of the waveguide assembly 1 shown in Fig. 1.

At the facet 19 of the dielectric waveguide 3 the structure of the dielectric waveguide 3 is visible. A waveguide core 21 of a rectangular shape is surrounded by a cladding 23 which has essentially a circular outer shape, but the shape can also vary in different embodiments of the invention (e.g. square, or the like).

The waveguide ferrule base 7 has an inner free diameter 25 and the dielectric waveguide 3 has an outer diameter 27. In case of embodiments with different shape (e.g. square or rectangular) dimensions of the waveguide ferrule base 7 and the dielectric waveguide 3 are given by means of one or more straight lengths such as width and height. In Fig. 1 the inner free diameter 25 and the outer diameter 27 are indicated with one double-headed arrow, wherein the inner free diameter 25 may be embodied slightly smaller than the outer diameter 27, such that the dielectric waveguide 3 is held within the waveguide ferrule 5 by means of a frictional fit 29. Different connection means between the dielectric waveguide 3 and the waveguide ferrule 5 are known in the art and not shown in the figures.

The waveguide ferrule 5 further comprises three locking members 31 which are embodied as collars 33 which extend from the waveguide ferrule base 7 in a radial direction 35 and at least partially around the waveguide ferrule base 7 in a circumferential direction 37.

The locking members 31 shown in Fig. 1 do not entirely extend around the waveguide ferrule base 7, but comprise a complementary coding member 38 which is embodied as a coding recess 39. The coding recess 39 is further embodied as a flattened portion 41. For the sake of visibility, only one coding recess 39 embodied as flattened portion is provided with a reference numeral in Fig.1.

It is to be noted that the radial direction 35 shown in Fig. 1 is only one representative of a multitude of possible radial directions 35 which extend from a center 43 of the waveguide ferrule 5 towards the waveguide ferrule base 7.

The flattened portion 41 of the locking members 31 is therefore flattened in a direction opposite the radial direction 35.

The embodiments shown in Figs. 1 and 2 have a fiber ferrule 5 with one single coding recess, wherein in different embodiments, a second coding recess may be provided which is located at a radially opposing side of the waveguide ferrule base 7.

Fig. 2 shows a second embodiment of an inventive waveguide assembly 1, wherein the embodiment of Fig. 2 additionally comprises a further coding member 45 which is embodied as a fin 47 in the embodiment shown in Fig. 2.

The further coding member 45 of Fig. 2 is located within a second coding recess 39b and within a third coding recess 39c, but is spaced apart from a first coding recess 39a by a distance in a direction opposite the longitudinal direction 11.

In a rectangle 49 a projection 51 along the cylindrical waveguide ferrule 5, i.e. in a direction opposite to the longitudinal direction 11, is shown. The projection 51 shows the facet 19 of the dielectric waveguide 3, the waveguide ferrule base 7 and the locking member 31, wherein in the projection 51 only a first locking member 31a is visible, wherein the second 31b and third locking member 31c are covered by the first locking member 31a.

Similarly, the first, second and third coding recess 39a, 39b, 39c are arranged behind each other, such that the further coding member 45 is located within all coding recesses 39a-39c in the projection 51.

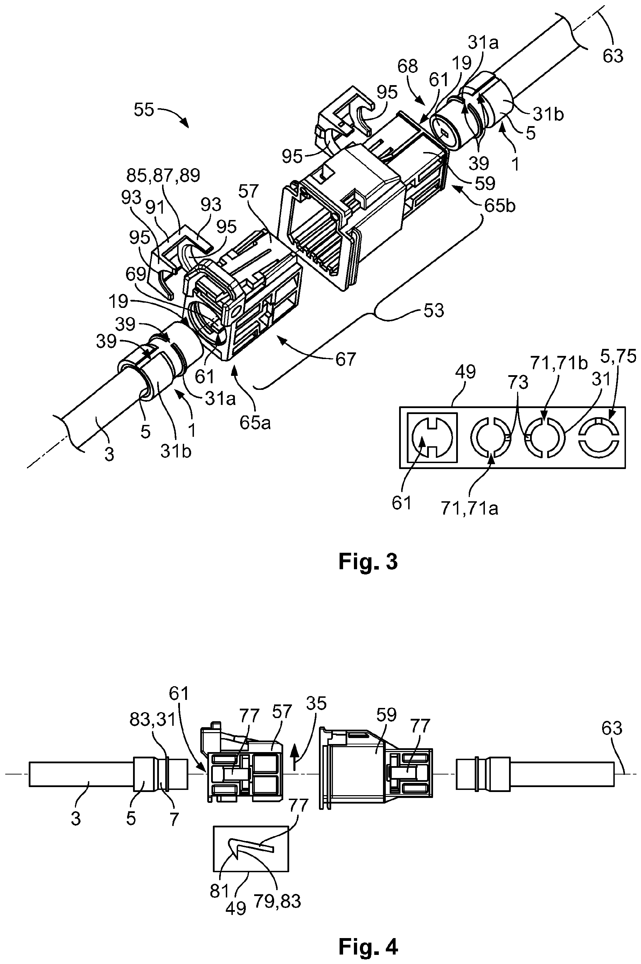

Fig. 3 shows a first embodiment of an inventive microwave connector assembly 55 which comprises two waveguide assemblies 1 and a ferrule socket 53.

The ferrule socket 53 comprises an inner member 57 and an outer member 59, wherein the inner member 57 may be inserted into the outer member 59.

The embodiment of the microwave connector assembly 55 shown in Fig. 3 comprises two ferrule receptacles 61, into which the waveguide ferrule 5 of the waveguide assembly 1 may be inserted respectively.

The waveguide assembly 1 and the ferrule socket 53 are arranged linearly along a waveguide axis 63. The waveguide assemblies 1 are arranged on opposite sides 65a and 65b of the ferrule socket 53 and face each other with their respective facets 19.

The waveguide ferrules 5 shown in Fig. 3 are embodied according to a second embodiment of the inventive waveguide ferrule and are distinct to the waveguide ferrules shown in Figs. 1 and 2 in that they comprise only a first locking member 31a and a second locking member 31b with the second locking member 31b having a larger dimension along a direction parallel to the waveguide axis 63 than the respective first locking member 31a.

Furthermore, the waveguide ferrules 5 of Fig. 3 each comprise four coding recesses 39, two of them being located below each of the corresponding waveguide ferrule 5. Overall, four coding recesses 39 are hidden in the view of Fig. 3.

Receiving the waveguide ferrule 5 within the ferrule receptacle 61 is similar for both of the shown waveguide ferrules 5, therefore the following description refers to a first connection region 67, the principles of which may be transferred to a second connection region 68.

Within the ferrule receptacle 61 a coding member 69 is visible, which extends inside the ferrule receptacle 61. On the opposite side of the ferrule receptacle 61 a second coding member 69 is extending into the ferrule receptacle 61 in a direction opposite to the first coding member 69 visible in Fig. 3.

If the waveguide assembly 1 of the first connection region 67 is inserted into the inner member 57, there are basically two predetermined angular positions of the waveguide ferrule 5 with respect to the ferrule receptacle 61 in which the coding members 69 of the ferrule receptacle 61 are received within the coding recesses 39 of the waveguide ferrule 5.

The predetermined angular positions 71 are indicated in the rectangle 49 of Fig. 3. In order to distinguish a first predetermined angular position 71a and a second predetermined angular position 71b, an indicator mark 73 is provided at the locking members 31 just for this explanation.

If the waveguide ferrule 5 is positioned in an arbitrary angular position 75, the coding member 69 of the ferrule receptacle 61 abuts the first locking member 31a during an attempt to insert the waveguide ferrule 5 into the ferrule receptacle 61. In such an arbitrary angular position 35 of the waveguide ferrule 5 further insertion and locking between the waveguide ferrule 5 and the ferrule socket 53 is not possible.

Now referring to Fig. 4, which shows a side view of the microwave connector assembly 55 of Fig. 3, a resilient arm 77 is embodied at the inner member 57 as well as at the outer member 59, wherein each of the resilient arms 77 comprises a counter locking member 79, which is shown in the rectangle 49 for a partially drawn and isolated resilient arm 77.

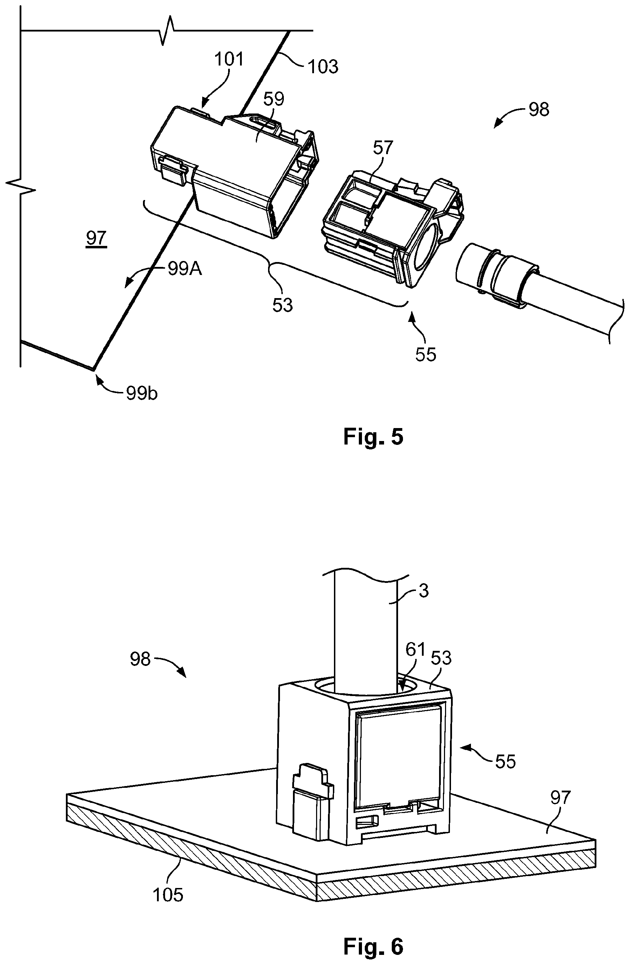

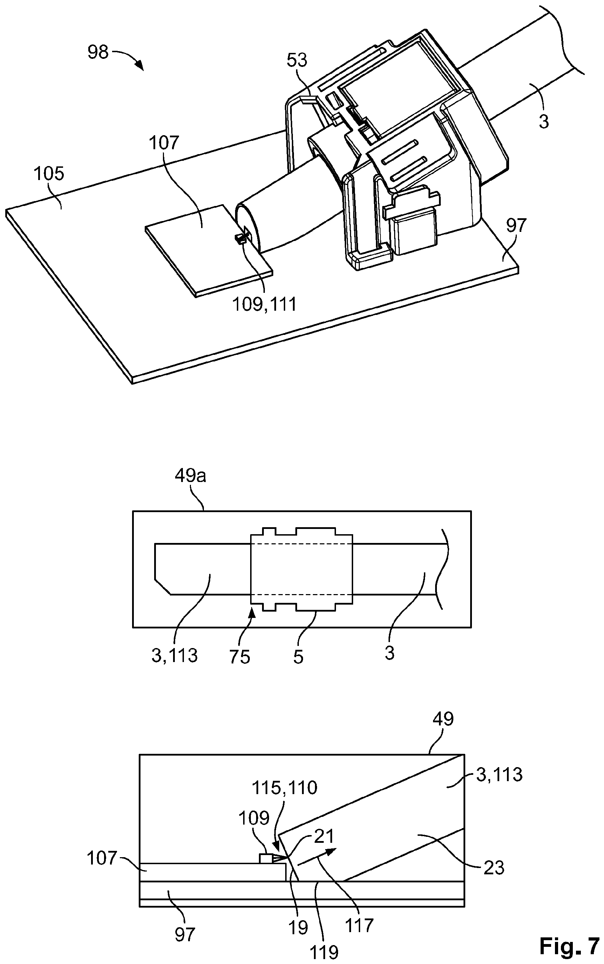

Upon receipt of the waveguide ferrule 5 within the ferrule receptacle 61 the resilient arm 77 is abutting the locking member 31 with a ramp 81 and deflects the resilient arms 77 away from the waveguide ferrule 5 in the radial direction 35. The locking member 31 slides along the ramp 81 until a final position (not shown in Fig. 4, see Figs. 6 and 7) is reached, wherein in the final position (not shown) the counter locking member 79 latches behind the locking member 31. In the final position, the resilient arm 77 relaxes back to the state shown in Fig. 4.

The locking member 31 and the resilient arm with its counter locking member 79 form a primary lock 83 that prevents unintentional removal of the waveguide ferrule 5 from the ferrule receptacle 61.

The primary lock 83 may be further supported by a secondary lock 85. The secondary lock 85 is formed by a retainer 87 shown in Fig. 3.

The retainer 87 is a substantially U-shaped part 89 with a base 91 and two secondary locking members 93 that extend substantially perpendicular from the base 91. The secondary locking members 93 each comprise an arc-shaped abutment front 95, which, when the retainer 87 is inserted into the inner member 57 or the outer member 59 in a direction opposite the radial direction 35, abut the waveguide ferrule base 7 or the dielectric waveguide 3 next to the locking members 31.

The arc-shaped abutment fronts 95 also prevents a relative movement between the waveguide ferrule 5 and the ferrule receptacle 61, as the retainers 87 abut the inner member 57 or the outer member 59 as well.

Fig. 5 shows a second embodiment of the inventive microwave connector assembly 55 incorporated into a microwave transmission assembly 98, wherein additionally a circuit board 97 is comprised.

Fig. 5 shows that an outer member 59, that forms part of the ferrule socket 53, is attached to a flat side 99a of the circuit board 97 and an attachment section 101. The ferrule socket 53 extends over an edge 103 of the circuit board 97.

The inner member 57 shown in Fig. 5 corresponds to the inner member 57 of Figs. 3 and 4, wherein the outer member 59 is embodied differently in Fig. 5.

Fig. 6 shows a further embodiment of the inventive microwave transmission assembly 98, wherein the dielectric waveguide 3 of the embodiment shown in Fig. 6 is oriented essentially perpendicular to the circuit board 97.

In Fig. 6 the dielectric waveguide 3 is inserted into a waveguide ferrule 5 (not shown), which is received in the ferrule receptacle 61 of the ferrule socket 53. The facet 19 (not shown) of the dielectric waveguide 3 is therefore oriented essentially parallel to the circuit board 97.

The embodiment shown in Fig. 6 has the advantage that the ferrule socket 53 as well as the dielectric waveguide 3 extend away from the circuit board 97 and are located within a footprint 105 of the circuit board 97. The footprint 105 is to be understood as an area covered by the circuit board 97.

The embodiments of the inventive electric assemblies 98 of Figs. 5 and 6 comprise a microwave emitter 107, which is, however, not visible in Figs. 5 and 6.

The microwave emitter 107 is visible in the embodiment of the inventive microwave transmission assembly 98 shown in Fig. 7.

The microwave emitter 107 is illustrated by a cuboid, and comprises an antenna 109 which is also only schematically indicated by a cuboid. The antenna 109 may be embodied in different ways and may for instance be an end-fire antenna (e.g. Vivaldi antenna 111) or broadside radiating antenna (e.g. patch).

In the rectangle 49, a side view of the circuit board 97, the microwave emitter 107 and the antenna 109, as well as the dielectric waveguide 3 are shown. The dielectric waveguide shown in Fig. 7 is referred to as excess end 113.

From the antenna 109 microwave radiation 115 is emitted towards the facet 19 of the excess end 113 and coupled into the waveguide core 21. An emission direction 117 is essentially parallel to the orientation of the excess end 113. The microwave radiation 115 has a specific radiation pattern 110 depending on the antenna 109 used. The radiation pattern 110 is not shown in the figures.

In order to allow an assembly of the excess end 113 close to the circuit board 97, the cladding 23 of the excess end 113 is partially cut to form a chamfer 119, the chamfer 119 abuts the circuit board 97.

In the embodiment of the inventive microwave transmission assembly 98 shown in Fig. 7 the ferrule socket 53 is completely located within the footprint 105 and on the flat side 99a of the circuit board 97. The dielectric waveguide 3 received within the ferrule socket 53 extends through a waveguide ferrule 5 which allows for providing a predetermined angular position of the waveguide ferrule 5 with respect to the ferrule socket 53. A rectangle 49a schematically shows the dielectric waveguide 3, the waveguide ferrule 5 and the excess end 113 of Fig. 7 without the ferrule socket 53.

The dashed lines indicate that the dielectric waveguide 3 extends through the waveguide ferrule 5, in particular beyond the connecting end 15.

### Reference Signs

- 1: waveguide assembly
- 3: dielectric waveguide
- 5: waveguide ferrule
- 7: waveguide ferrule base
- 9: hollow cylinder
- 11: longitudinal direction
- 13: receiving end
- 15: connecting end
- 17: waveguide end
- 19: facet
- 21: waveguide core
- 23: cladding
- 25: inner free diameter
- 27: outer diameter
- 29: frictional fit
- 31: locking member
- 31a: first locking member
- 31b: second locking member
- 31c: third locking member
- 33: collar
- 35: radial direction
- 37: circumferential direction
- 38: complementary coding member
- 39: coding recess
- 39a: first coding recess
- 39b: second coding recess
- 39c: third coding recess
- 41: flattened portion
- 43: center
- 45: further coding member
- 47: fin
- 49: rectangle
- 49a: rectangle
- 51: projection
- 53: ferrule socket
- 55: microwave connector assembly
- 57: inner member
- 59: outer member
- 61: ferrule receptacle
- 63: waveguide axis
- 65a, 65b: opposite sides
- 67: first connection region
- 68: second connection region
- 69: coding member
- 71: predetermined angular position
- 71a: first predetermined angular position
- 71b: second predetermined angular position
- 73: indicator mark
- 75: arbitrary angular position
- 77: resilient arm
- 79: counter locking member
- 81: ramp
- 83: primary lock
- 85: secondary lock
- 87: retainer
- 89: U-shaped part
- 91: base
- 93: secondary locking member
- 95: arc-shaped abutment front
- 97: circuit board
- 98: microwave transmission assembly
- 99a: flat side
- 99b: second side
- 101: attachment section
- 103: edge
- 105: footprint
- 107: microwave emitter
- 109: antenna
- 110: radiation pattern
- 111: Vivaldi antenna
- 113: excess end
- 115: microwave radiation
- 117: emission direction
- 119: chamfer

## Claims

1. Microwave connector assembly (55), comprising a cylindrical waveguide ferrule (5) having a receiving end (13) for receiving a polarization-maintaining microwave dielectric waveguide (3) and a connecting end (15) located distal to the receiving end (13) and a ferrule socket (53) for at least partially receiving the waveguide ferrule (5) in a ferrule receptacle (61), the waveguide ferrule (5) comprising at least one locking member (31) for a locking connection with the ferrule socket (53) wherein the ferrule socket (53) comprises at least one coding member (69) that engages a complementary coding member (38) of the waveguide ferrule (5) only when the waveguide ferrule (5) is positioned relative to the ferrule socket (53) in a single predetermined angular position (71) or in one out of two predetermined angular positions (71) which are rotated by 180° with respect to each other, **characterized in that** the waveguide ferrule (5) comprises a further coding member (45), which, in a projection (51) along the cylindrical waveguide ferrule (5), is at least partially located within the complementary coding member (38) embodied as a coding recess (39).

2. Microwave connector assembly (55) according to claim 1, wherein the complementary coding member (38) of the waveguide ferrule (15) comprises a flattened portion (41) being flattened in a direction opposite a radial direction (35).

3. Microwave connector assembly (55) according to claim 1 or 2, wherein two complementary coding members (38) and two coding members (69) are comprised that are located at radially opposed sides of the waveguide ferrule base (7) and/or at radially opposed sides of the ferrule receptacle (61), respectively.

4. Microwave connector assembly (55) according to any one of claims 1 to 3, wherein a dielectric waveguide (3) is comprised, the dielectric waveguide (3) having a free end (17), which extends beyond the waveguide ferrule (5).

5. Microwave connector assembly (55) according to any one of claims 1 to 4, wherein a retainer (87) is comprised which is insertable into the ferrule socket (53), and in that a secondary locking member (93) of the retainer (87) engages with the locking member (31), preventing the waveguide ferrule (5) from being removed from the ferrule socket (53).

6. Microwave connector assembly (55) according to any one of claims 1 to 5, wherein the ferrule socket (53) comprises two ferrule receptacles (61) opposing each other, the connecting ends (15) of the two waveguide ferrules (5) positioned in the corresponding ferrule receptacles (61) and being spaced apart from each other less than one wavelength of microwave radiation (115).

7. Microwave transmission assembly (98) comprising a microwave connector assembly (55) according to any one of claims 1 to 6, a dielectric waveguide (3) and a microwave emitter (105) located on a flat side (99a) of a circuit board (97), wherein the microwave emitter (107) has a microwave antenna (109) with a radiation pattern (110) that is at least partially directed towards the waveguide end (17), and wherein the waveguide (3) has a free end (17) which is located on the flat side (99a) of the circuit board (97).

8. Microwave transmission assembly (98) according to claim 7, wherein the waveguide socket (53) is fastened to the flat side (99a) of the circuit board (97).

9. Microwave transmission assembly (98) according to claim 7 or 8, wherein the ferrule socket (53) is located within the footprint (105) of the circuit board (97).

10. Microwave transmission assembly (98) according to claim 9, wherein the dielectric waveguide (3) is oriented slanted or perpendicular with respect to the flat side (99a) of the circuit board (97).

11. Microwave transmission assembly (98) according to any one of claims 7 to 10, wherein the waveguide end (17) extends out of the ferrule socket (53).

## Patentansprüche

1. Mikrowellen-Verbinderanordnung (55), die eine zylindrische Wellenleiter-Ferrule (5) mit einem aufnehmenden Ende (13) zum Aufnehmen eines Polarisation erhaltenden dielektrischen-Wellenleiters (3) und einem vor dem aufnehmenden Ende (13) angeordneten verbindenden Ende (15) sowie eine Ferrulen-Buchse (53), die die Wellenleiter-Ferrule (5) in einer Ferrulen-Aufnahme (61) wenigstens teilweise aufnimmt, wobei die Wellenleiter-Ferrule (5) wenigstens ein Arretierelement (31) für eine arretierende Verbindung mit der Ferrulen-Buchse (53) umfasst, die Ferrulen-Buchse (53) wenigstens ein Kodierelement (69) umfasst, das nur dann mit einem komplementären Kodierelement (38) der Wellenleiter-Ferrule (5) in Eingriff kommt, wenn die Wellenleiter-Ferrule (5) relativ zu der Ferrulen-Buchse (53) in einer einzelnen vorgegebenen Winkelstellung (71) oder in einer von zwei vorgegebenen Winkelstellungen (71) positioniert ist, die um 180° zueinander rotiert sind, **dadurch gekennzeichnet, dass** die Wellenleiter-Ferrule (5) ein weiteres Kodierelement (45) umfasst, das in einer Projektion (51) entlang der zylindrischen Wellenleiter-Ferrule (5) als eine Kodier-Aussparung (39) ausgeführt wenigstens teilweise innerhalb des komplementären Kodierelementes (38) angeordnet ist.

2. Mikrowellen-Verbinderanordnung (55) nach Anspruch 1, wobei das komplementäre Kodierelement (38) der Wellenleiter-Ferrule (15) einen abgeflachten Abschnitt (41) aufweist, der in einer Richtung entgegengesetzt zu einer radialen Richtung (35) abgeflacht ist.

3. Mikrowellen-Verbinderanordnung (55) nach Anspruch 1 oder 2, wobei zwei komplementäre Kodierelemente (38) und zwei Kodierelemente (69) eingeschlossen sind, die jeweils an radial gegenüberliegenden Seiten des Sockels (7) der Wellenleiter-Ferrule und/oder an radial gegenüberliegenden Seiten der Ferrulen-Aufnahme (61) angeordnet sind.

4. Mikrowellen-Verbinderanordnung (55) nach einem der Ansprüche 1 bis 3, wobei ein dielektrischer Wellenleiter (3) eingeschlossen ist und der dielektrische Wellenleiter (3) ein freies Ende (17) hat, das sich über die Wellenleiter-Ferrule (5) hinaus erstreckt.

5. Mikrowellen-Verbinderanordnung (55) nach einem der Ansprüche 1 bis 4, wobei ein Halter (87) eingeschlossen ist, der in die Ferrulen-Buchse (53) eingeführt werden kann, und dass ein sekundäres Arretierelement (93) des Halters (87) mit dem Arretierelement (31) in Eingriff ist, wodurch Entfernen der Wellenleiter-Ferrule (5) aus der Ferrulen-Buchse (53) verhindert wird.

6. Mikrowellen-Verbinderanordnung (55) nach einem der Ansprüche 1 bis 5, wobei die Ferrulen-Buchse (53) zwei einander gegenüberliegende Ferrulen-Aufnahmen (61) umfasst, die verbindenden Enden (15) der zwei Wellenleiter-Ferrulen (5) in den entsprechenden Ferrulen-Aufnahmen (61) positioniert und um weniger als eine Wellenlänge der Mikrowellenstrahlung (115) voneinander beabstandet sind.

7. Mikrowellen-Übertragungsanordnung (98), die eine Mikrowellen-Verbinderanordnung (55) nach einem der Ansprüche 1 bis 6, einen dielektrischen Wellenleiter (3) sowie eine Mikrowellen-Emissionseinrichtung (105) umfasst, die an einer flachen Seite (99a) einer Leiterplatte (97) angeordnet ist, wobei die Mikrowellen-Emissionseinrichtung (107) eine Mikrowellenantenne (109) mit einer Strahlungscharakteristik (110) aufweist, die wenigstens teilweise auf das Wellenleiter-Ende (17) zu gerichtet ist, und der Wellenleiter (3) ein freies Ende (17) hat, das an der flachen Seite (99a) der Leiterplatte (97) angeordnet ist.

8. Mikrowellen-Übertragungsanordnung (98) nach Anspruch 7, wobei die Wellenleiter-Buchse (53) an der flachen Seite (99a) der Leiterplatte (97) befestigt ist.

9. Mikrowellen-Übertragungsanordnung (98) nach Anspruch 7 oder 8, wobei die Ferrulen-Buchse (53) innerhalb der Flächenausdehnung (105) der Leiterplatte (97) angeordnet ist.

10. Mikrowellen-Übertragungsanordnung (98) nach Anspruch 9, wobei der dielektrische Wellenleiter (3) schräg oder senkrecht in Bezug auf die flache Seite (99a) der Leiterplatte (97) ausgerichtet ist.

11. Mikrowellen-Übertragungsanordnung (98) nach einem der Ansprüche 7 bis 10, wobei sich das Wellenleiter-Ende (17) aus der Ferrulen-Buchse (53) heraus erstreckt.

## Revendications

1. Ensemble de connecteur de micro-ondes (55), comprenant une ferrule de guide d'ondes cylindrique (5) ayant une extrémité de réception (13) pour recevoir un guide d'ondes diélectrique de micro-ondes à maintien de polarisation (3) et une extrémité de connexion (15) située de manière distale par rapport à l'extrémité de réception (13) et une douille de ferrule (53) pour recevoir au moins partiellement la ferrule de guide d'ondes (5) dans un réceptacle de ferrule (61), la ferrule de guide d'ondes (5) comprenant au moins un élément de verrouillage (31) pour une connexion de verrouillage avec la douille de ferrule (53), dans laquelle la douille de ferrule (53) comprend au moins un élément de codage (69) qui s'engage avec un élément de codage complémentaire (38) de la ferrule de guide d'ondes (5) uniquement lorsque la ferrule de guide d'ondes (5) est en contact avec l'élément de codage complémentaire (38). de la ferrule de guide d'ondes (5) uniquement lorsque la ferrule de guide d'ondes (5) est positionnée par rapport à la douille de ferrule (53) dans une seule position angulaire prédéterminée (71) ou dans l'une des deux positions angulaires prédéterminées (71) qui sont tournées de 180° l'une par rapport à l'autre, **caractérisé en ce que** la ferrule de guide d'ondes (5) comprend un autre élément de codage (45), qui, dans une projection (51) le long de la ferrule cylindrique de guide d'ondes (5), est au moins partiellement situé dans l'élément de codage complémentaire (38) réalisé sous la forme d'un évidement de codage (39).

2. Ensemble de connecteur de micro-ondes (55) selon la revendication 1, dans lequel l'élément de codage complémentaire (38) de la ferrule de guide d'ondes (15) comprend une partie aplatie (41) qui est aplatie dans une direction opposée à une direction radiale (35).

3. Ensemble de connecteur de micro-ondes (55) selon la revendication 1 ou 2, dans lequel deux éléments de codage complémentaires (38) et deux éléments de codage (69) sont compris qui sont situés sur des côtés radialement opposés de la base de ferrule de guide d'ondes (7) et/ou sur des côtés radialement opposés du réceptacle de ferrule (61), respectivement.

4. Ensemble de connecteur de micro-ondes (55) selon l'une quelconque des revendications 1 à 3, dans lequel un guide d'ondes diélectrique (3) est compris, le guide d'ondes diélectrique (3) ayant une extrémité libre (17), qui s'étend au-delà de la ferrule de guide d'ondes (5).

5. Ensemble de connecteur de micro-ondes (55) selon l'une quelconque des revendications 1 à 4, dans lequel un dispositif de retenue (87) est compris qui peut être inséré dans la douille de ferrule (53), et en ce qu'un élément de verrouillage secondaire (93) du dispositif de retenue (87) s'engage avec l'élément de verrouillage (31), empêchant la ferrule de guide d'ondes (5) d'être retirée de la douille de ferrule (53).

6. Ensemble de connecteur de micro-ondes (55) selon l'une quelconque des revendications 1 à 5, dans lequel la douille de ferrule (53) comprend deux réceptacles de ferrule (61) opposés l'un à l'autre, les extrémités de connexion (15) des deux ferrules de guide d'ondes (5) étant positionnées dans les réceptacles de ferrule correspondants (61) et étant espacées l'une de l'autre de moins d'une longueur d'onde de rayonnement de micro-ondes (115).

7. Ensemble de transmission de micro-ondes (98) comprenant un ensemble de connecteur de micro-ondes (55) selon l'une quelconque des revendications 1 à 6, un guide d'ondes diélectrique (3) et un émetteur de micro-ondes (105) situé sur un côté plat (99a) d'une carte de circuit imprimé (97), dans lequel l'émetteur de micro-ondes (107) a une antenne de micro-ondes (109) avec un diagramme de rayonnement (110) qui est au moins partiellement dirigé vers l'extrémité du guide d'ondes (17), et dans lequel le guide d'ondes (3) a une extrémité libre (17) qui est située sur le côté plat (99a) de la carte de circuit imprimé (97).

8. Ensemble de transmission de micro-ondes (98) selon la revendication 7, dans lequel la douille de guide d'ondes (53) est fixée sur le côté plat (99a) de la carte de circuit imprimé (97).

9. Ensemble de transmission de micro-ondes (98) selon la revendication 7 ou 8, dans lequel la douille de ferrule (53) est située dans l'empreinte (105) de la carte de circuit imprimé (97).

10. Ensemble de transmission de micro-ondes (98) selon la revendication 9, dans lequel le guide d'ondes diélectrique (3) est orienté de manière inclinée ou perpendiculaire par rapport au côté plat (99a) de la carte de circuit imprimé (97).

11. Ensemble de transmission de micro-ondes (98) selon l'une quelconque des revendications 7 à 10, dans lequel l'extrémité du guide d'ondes (17) s'étend hors de l'embase de la ferrule (53).
